# EUROPEAN PATENT SPECIFICATION

(11) **EP 2 528 135 B1**
(45) Date of publication and mention of the grant of the patent: **03.01.2018**
(21) Application number: 10843128.9
(22) Date of filing: 24.11.2010
(51) Int. Cl.: H01M 2/10, B60K 1/04

(54) **BATTERY CASE FOR VEHICLE**
BATTERIEGEHÄUSE FÜR EIN FAHRZEUG
BAC D'ACCUMULATEUR POUR VÉHICULE

(30) Priority: 18.01.2010 JP 2010008136
(43) Date of publication of application: 28.11.2012
(73) Proprietor: Mitsubishi Jidosha Kogyo Kabushiki Kaisha, Tokyo 108-8410 (JP)
(72) Inventor: LOO, Weng Leong, Tokyo 108-8410 (JP); FUJIWARA, Yutaka, Tokyo 108-8410 (JP); YOSHIOKA, Hideki, Tokyo 108-8410 (JP); INOUE, Yasuhiro, Tokyo 108-8410 (JP); OGATA, Fumihiro, Tokyo 108-8410 (JP); TAKASAKI, Seiichi, Tokyo 108-8410 (JP); HONJO, Hideki, Tokyo 108-8410 (JP)
(74) Representative: Vossius & Partner Patentanwälte Rechtsanwälte mbB
(86) International application number: PCT/JP2010/070865
(87) International publication number: WO 2011/086773

(56) References cited:
- DE-A1- 19 812 084
- JP-A- 5 193 366
- JP-A- 2009 087 645
- US-A1- 2009 197 154
- US-A1- 2009 236 162

## Description

### Technical Field

The present invention relates to battery cases for vehicles, and more particularly, to a battery case for containing a battery for driving an electric-powered vehicle.

### Background Art

In recent years, hybrid vehicles and electric vehicles have been widely developed, which vehicles are equipped with a large-capacity battery and configured to use, as one power source, a drive motor driven by the electric power supplied from the battery.

Battery cases mounted on such electric-powered vehicles are constituted, for example, by a tray member for containing a battery, and a cover member covering the tray member.

In the battery case configured in this manner, a plurality of battery modules are placed on the tray member, and therefore, the battery case is prone to increase in overall weight. There has been known to form the cover member and the tray member out of resin, in order to reduce the overall weight of the battery case.

Where the cover member and the tray member are made of resin, however, a problem arises in that the stiffness or rigidity of the battery case lowers. If the rigidity is lower than necessary, the battery case needs to be provided with reinforcing members that ensure strength high enough to satisfactorily bear the load applied by the multiple battery modules.

In the circumstances, there has been proposed a configuration in which the battery case is provided with crossbeams made of a metallic material and externally attached to the bottom of the tray member so as to extend in the width direction of the vehicle body (Patent Document 1) .

### Prior Art Literature

### Patent Document

Patent Document 1: Japanese Laid-open Patent Publication No. 2009-87645

### Summary of the Invention

### Problems to be Solved by the Invention

In the technique disclosed in Patent Document 1, however, the aperture plane of a recess formed in each crossbeam is covered with a plate-like lid member. With such a configuration, the number of component parts of the battery case as a whole increases, giving rise to a problem that the cost of the battery case also increases.

If the crossbeams are attached to the tray member with the aperture planes of the recesses uncovered, it is possible that the crossbeams may fail to provide the necessary strength for supporting the battery case. If this occurs, the battery case is undesirably warped due to the load applied by the battery modules.

The present invention was made to solve the above problem, and an object thereof is to provide a battery case for a vehicle whereby the strength of beam members is enhanced and also the number of component parts can be reduced.

### Means for Solving the Problems

To achieve the above object, claim 1 provides a battery case for containing a battery for driving a vehicle, comprising: a tray member made of a resin and configured to hold the battery; one or more beam members arranged so as to extend in at least one of width and longitudinal directions of the tray member, the one or more beam members supporting the tray member and having a recess formed therein; and a bottom wall interposed between the tray member and the one or more beam members and closing an aperture plane of the recess of the one or more beam members to form a closed cross-section, the bottom wall being constituted by a continuous metal plate underlying a bottom plate of the tray member.

According to claim 2, in the battery case of claim 1, the one or more beam members include a first beam member extending in the width direction of the tray member and a second beam member extending in the longitudinal direction of the tray member, and the first and second beam members have respective aperture planes substantially flush with each other and closed by the bottom wall.

According to claim 3, the battery case of claim 1 or 2 further comprises a frame member constituted by a metal plate covering an outer periphery of the tray member, wherein the bottom wall is fixed to the frame member.

### Advantageous Effects of the Invention

In the battery case for a vehicle according to claim 1, the bottom wall constituted by a continuous metal plate is interposed between the tray member and the beam member arranged so as to extend in at least one of the width and longitudinal directions of the tray member and supporting the tray member, the aperture plane of the recess formed in the beam member is closed up with the bottom wall to form a closed cross-section, and the bottom wall underlies the bottom plate of the tray member.

Thus, the bottom wall and the beam member cooperatively form a closed cross-section structure, and since the beam member is increased in strength by being reinforced by the bottom wall, it is possible to secure the necessary strength for supporting the battery case.

Because of the closed cross-section structure formed by the bottom wall and the beam member and also because the bottom wall underlies the bottom plate of the tray member, electromagnetic waves generated when high electric current flows in the battery are shut off by the bottom wall, making it possible to prevent such electromagnetic waves from adversely affecting electronic devices mounted on the vehicle.

Also, it is unnecessary to use a separate lid member for covering the aperture plane of the recess in the beam member, whereby the number of component parts as well as cost of the battery case can be reduced.

Further, since the bottom wall constituted by a continuous metal plate underlies the bottom plate of the tray member, sufficiently high rigidity of the tray member is ensured, making it possible to prevent the tray member from being warped due to the load applied by the battery contained in the tray member.

In the battery case for a vehicle according to claim 2, the beam members include the first beam member extending in the width direction of the tray member and the second beam member extending in the longitudinal direction of the tray member, and the first and second beam members have their respective aperture planes substantially flush with each other and closed by the bottom wall.

Thus, the aperture planes of the first and second beam members arranged so as to extend in the width and longitudinal directions, respectively, of the tray member are closed up with the bottom wall constituted by a continuous metal plate. It is therefore unnecessary to use separate lid members for covering the respective aperture planes of the beam members, whereby the number of component parts and cost of the battery case can be reduced.

In the battery case for a vehicle according to claim 3, the bottom wall is fixed to the frame member constituted by the metal plate covering the outer periphery of the tray member. Accordingly, the rigidity of the tray member can be further enhanced, making it possible to prevent the tray member from being warped due to the load applied by the battery contained in the tray member.

### Brief Description of the Drawings

FIG. 1 is a perspective view of an electric vehicle on which a battery case according to the present invention is mounted.
FIG. 2 illustrates a schematic configuration of the battery case according to a first embodiment, shown in FIG. 1.
FIG. 3 is an exploded perspective view of the battery case shown in FIG. 2.
FIG. 4 is a longitudinal sectional view taken along line A-A in FIG. 2.
FIG. 5 illustrates a schematic configuration of a battery case according to a second embodiment of the present invention.
FIG. 6 is an exploded perspective view of the battery case shown in FIG. 5.
FIG. 7 is a cross-sectional view taken along line B-B in FIG. 5.

### Mode of Carrying out the Invention

Embodiments of the present invention will be described below with reference to the accompanying drawings.

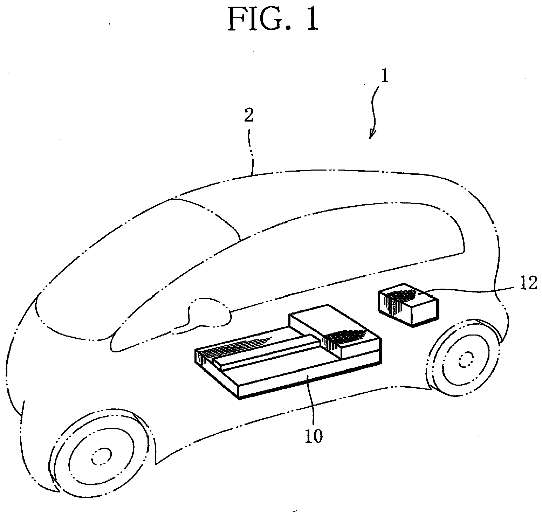

FIG. 1 is a perspective view of an electric vehicle on which a battery case according to the present invention is mounted.

As illustrated in FIG. 1, the electric vehicle 1 is equipped with a battery case 10 placed under the floor of a vehicle body 2 and a charging path, not shown, for receiving electric power from outside. A battery charger 12, which is supplied with electric power through the charging path for charging, is arranged in a rear part of the vehicle body 2. The battery case 10 is connected to the battery charger 12 and is configured so that the electric power from the battery charger 12 may be stored in a battery arranged therein.

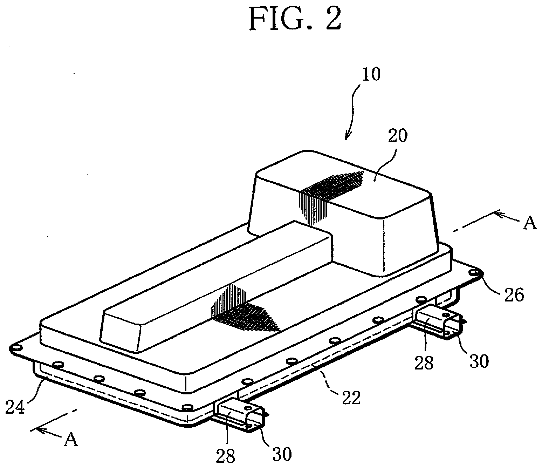

FIG. 2 illustrates a schematic configuration of the battery case 10 according to a first embodiment of the present invention.

The battery case 10 includes a cover (cover member) 20, a tray 22 (tray member) made of resin, a frame 24 covering the outer periphery of the resin tray 22, fastening members 26 fastening the cover 20 and the frame 24 together, mounting brackets 28 by means of which the battery case 10 is attached to the vehicle body 2, and beam members 30 supporting the battery case 10. The cover 20 is located above all the other illustrated parts and elements.

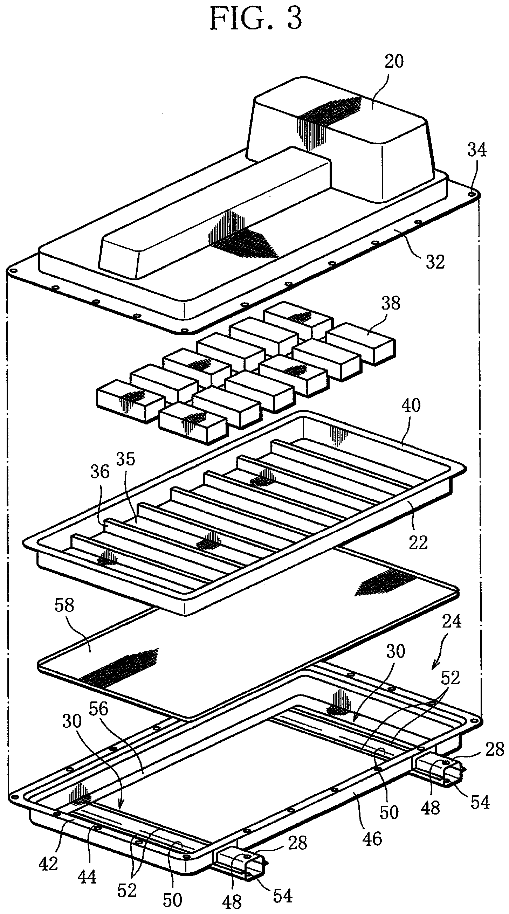

As shown in the exploded perspective view of FIG. 3 illustrating the battery case 10, through holes 34 are formed in a peripheral edge portion 32 of the cover 20.

The resin tray 22, around which the peripheral edge portion 32 of the cover 20 is fitted, has a plurality of ridge-like projections 36 protruding from an inside bottom 35 thereof and extending in a width direction of the resin tray 22. The ridge-like projections 36 are provided so that battery modules (battery) 38 may be arrayed with the ridge-like projections 36 located therebetween. The battery modules 38, each of which includes a plurality of lithium-ion battery cells connected in series, are arranged in respective sections of the inside bottom 35 partitioned by the ridge-like projections 36. The battery to be used may be any other secondary battery and is not limited to lithium-ion battery.

A waterproof seal member, not shown, is affixed to that surface of a peripheral edge portion 40 of the resin tray 22 on which the cover 20 is superimposed. When brought into contact with the peripheral edge portion 32 of the cover 20, the seal member seals a gap between the peripheral edge portion 32 of the cover 20 and the peripheral edge portion 40 of the resin tray 22, whereby waterproofness of the battery case 10 is ensured.

The cover 20 and the tray 22 are each made of an electrically insulating resin reinforced with the use of reinforcing members such as glass fibers or the like.

The outer periphery of the resin tray 22 is covered with the frame 24. The frame 24 is obtained, for example, by pressing and forming a metal plate into shape.

The frame 24 has through holes 44 formed in a peripheral edge portion 42 thereof such that the through holes 44 correspond in position to the respective through holes 34 formed in the peripheral edge portion 32 of the cover 20.

The mounting brackets 28 are secured to the opposite end portions of each longitudinal section of an outer peripheral wall 46 of the frame 24. Each mounting bracket 28 has a fastening portion 48 at one end thereof.

The beam member 30 is fixed to each pair of mounting brackets 28, 28, as viewed in the width direction of the frame 24. Each beam member 30 has a recess 50 formed therein and edges 52 extending on both sides of the recess 50. The edges 52 are disposed in contact with the lower surface of the frame 24, and thus the aperture plane of the recess 50 is flush with the lower surface of the frame 24. The beam members 30 are made of a metallic material capable of satisfactorily bearing the load applied by the battery modules 38 and the like.

Each beam member 30 has fastening portions 54 at longitudinally opposite ends thereof, and the fastening portions 54 correspond in position to the respective fastening portions 48 of the corresponding mounting bracket 28. The battery case 10 is fixed at the fastening portions 48 and 54 to the vehicle body 2 by fastening members, not shown.

An inner frame edge 56 extends from the inner surface of the peripheral wall of the frame 24 by a predetermined distance toward the center of the frame 24. A continuous bottom wall 58 is laid on and fixed to the inner frame edge 56. The bottom wall 58 is constituted by a rigid metal plate so as to be able to satisfactorily bear the load applied by the battery modules 38.

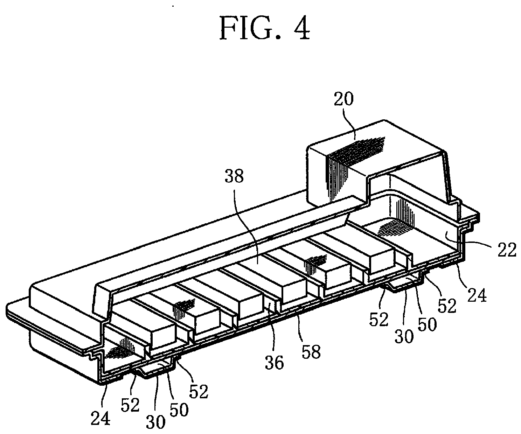

As seen from the longitudinal sectional view of FIG. 4 taken along line A-A in FIG. 2, the resin tray 22 has a bottom plate overlying the bottom wall 58. The beam members 30 are disposed in contact with the lower surface of the bottom wall 58, and the aperture plane of the recess 50 of each beam member 30 is closed with the bottom wall 58, thus forming a closed cross-section.

Referring again to FIG. 3, the cover 20 is superimposed on the resin tray 22 and the frame 24, and the peripheral edge portion 32 of the cover 20 and the peripheral edge portion 42 of the frame 24 are fastened together by the fastening members 26 inserted through the through holes 34 and 44, whereby the cover 20 is fixed to the frame 24 with the resin tray 22 interposed therebetween.

As stated above, in the battery case for an electric vehicle according to the present invention, the continuous bottom wall 58 constituted by a metal plate is laid on and fixed to the upper surface of the inner frame edge 56 of the frame 24 covering the outer periphery of the resin tray 22, the inner frame edge 56 extending from the inner surface of the peripheral wall of the frame 24 by the predetermined distance toward the center of the frame 24. The bottom wall 58 underlies the bottom plate of the resin tray 22. The widthwise extending beam members 30 are disposed in contact with the lower surface of the inner frame edge 56 of the frame 24, and the aperture plane of the recess 50 of each beam member 30 is closed with the bottom wall 58, thus forming a closed cross-section.

In this manner, each beam member 30 and the bottom wall 58 constituted by a continuous metal plate cooperatively form a closed cross-section structure, and since the bottom wall 58 reinforces the beam members 30 to enhance their strength, necessary strength for supporting the battery case 10 can be secured.

Also, because of the closed cross-section structure formed by the bottom wall 58 and the individual beam members 30 and also because the bottom wall 58 constituted by a continuous metal plate underlies the bottom plate of the resin tray 22, the bottom wall 58 serves to shut off electromagnetic waves that are generated when high electric current flows in the battery modules 38 placed on the resin tray 22, making it possible to prevent such electromagnetic waves from adversely affecting electronic devices mounted on the vehicle.

Further, it is unnecessary to use separate lid members for closing the aperture planes of the respective beam members 30. Thus, the number of component parts of the battery case 10 can be reduced, making it possible to reduce the cost of the battery case 10.

Since the bottom wall 58 is fixed to the inner frame edge 56, the outer periphery and bottom of the resin tray 22 placed on the bottom wall 58 are enclosed by the frame 24 and the bottom wall 58. Consequently, sufficiently high rigidity is imparted to the resin tray 22, making it possible to prevent the resin tray 22 from being warped due to the load applied by the battery modules 38 accommodated in the resin tray 22.

A second embodiment of the present invention will be now described.

A battery case for a vehicle according to the second embodiment differs from the counterpart of the first embodiment in that the beam members 30 are arranged so as to extend in both the width and longitudinal directions of the frame 24. In the other respects, the second embodiment is identical in configuration with the first embodiment. Accordingly, explanation of the identical parts and elements is omitted, and only the differences will be explained.

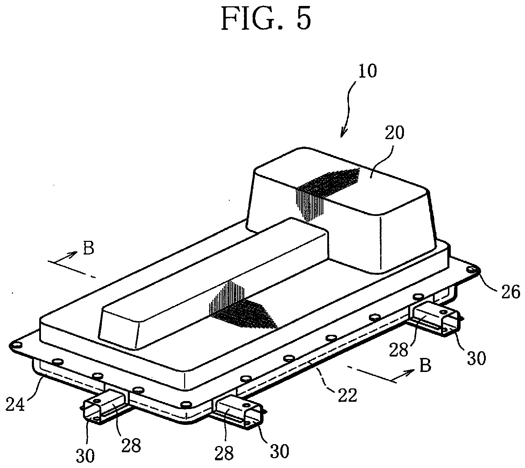

FIG. 5 illustrates a schematic configuration of the battery case according to the second embodiment of the present invention.

As shown in FIG. 5, the mounting brackets 28 are secured to the widthwise opposite sides as well as longitudinally opposite ends of the frame 24. The beam members 30 are fixed to the two widthwise pairs and one longitudinal pair of mounting brackets 28, 28, respectively.

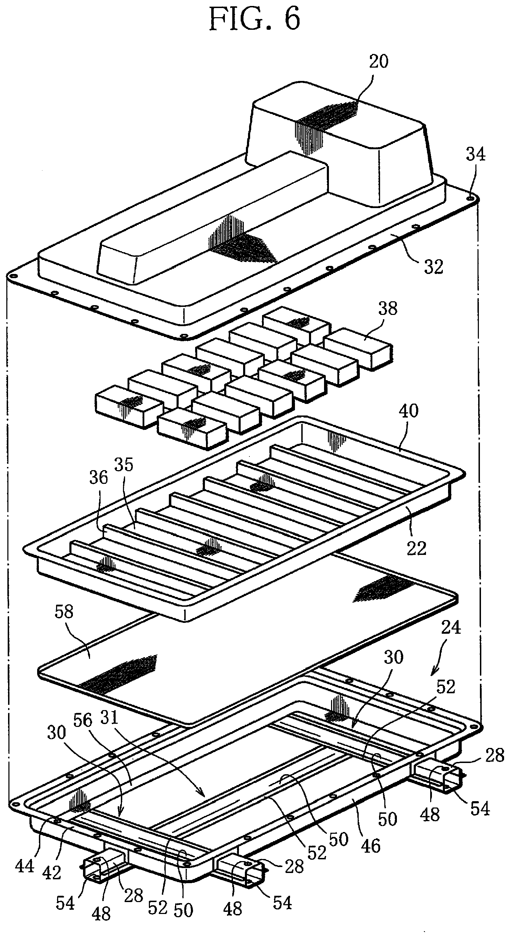

FIG. 6 is an exploded perspective view of the battery case 10 shown in FIG. 5, and as illustrated, the beam member (first beam member) 30 is fixed to each widthwise pair of mounting brackets 28, 28 secured to the frame 24. Also, the beam member (second beam member) 31 is fixed to the longitudinal pair of mounting brackets 28, 28 secured to the frame 24. Each of the beam members 30 and 31 has a recess 50 formed therein and edges 52 extending on both sides of the recess 50. The edges 52 are disposed in contact with the lower surface of the frame 24, and thus the aperture plane of the recess 50 is flush with the lower surface of the frame 24.

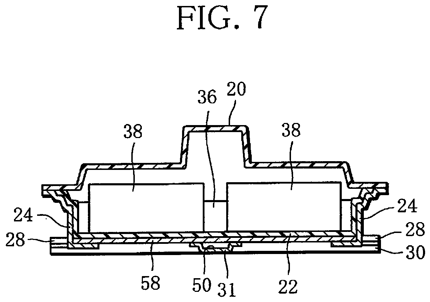

As seen from the cross-sectional view of FIG. 7 taken along line B-B in FIG. 5, the aperture plane of the recess 50 formed in each of the beam members 30 and 31, which are fixed to the widthwise and longitudinal pairs of mounting brackets 28, 28 secured to the frame 24, is closed with the bottom wall 58, thus forming a closed cross-section.

In this manner, the aperture plane of the recess 50 in each of the beam members 30 and 31 arranged so as to extend in not only the width direction but the longitudinal direction of the frame 24 is covered with the bottom wall 58 to form a closed cross-section structure. It is therefore unnecessary to use separate lid members for closing the aperture planes of the respective recesses 50, making it possible to reduce the number of component parts of the battery case 10 as well as the cost of the battery case 10.

Also with the above configuration, the same advantageous effects as those achieved by the first embodiment can be obtained.

While the embodiments of the present invention have been described above, it is to be noted that the present invention is not limited to the foregoing embodiments.

For example, in the above embodiments, the number of the beam members 30 disposed in contact with the lower surface of the bottom wall 58 may be suitably changed as needed without departing from the scope of the present invention.

Also, in the foregoing embodiments, the electric vehicle is exemplified as a vehicle. The present invention is also equally applicable to hybrid vehicles.

### Explanation of Reference Signs

- 1: electric vehicle
- 10: battery case
- 20: resin tray (tray member)
- 30: beam member
- 50: recess
- 58: bottom wall

## Claims

1. A battery case for containing a battery for driving a vehicle, comprising:
a tray member made of a resin and configured to hold the battery;
one or more beam members arranged so as to extend in at least one of width and longitudinal directions of the tray member, the one or more beam members supporting the tray member and having a recess formed therein; and
a bottom wall interposed between the tray member and the one or more beam members and closing an aperture plane of the recess of the one or more beam members to form a closed cross-section, the bottom wall being constituted by a continuous metal plate underlying a bottom plate of the tray member.

2. The battery case according to claim 1, wherein:
the one or more beam members include a first beam member extending in the width direction of the tray member, and a second beam member extending in the longitudinal direction of the tray member, and
the first and second beam members have respective aperture planes substantially flush with each other and closed by the bottom wall.

3. The battery case according to claim 1 or 2, further comprising a frame member constituted by a metal plate covering an outer periphery of the tray member,
wherein the bottom wall is fixed to the frame member.

## Patentansprüche

1. Batteriegehäuse zur Aufnahme einer Batterie zum Antreiben eines Fahrzeugs, die aufweist:
ein Trogelement, das aus einem Harz besteht und konfiguriert ist, die Batterie zu halten; ein oder mehrere Trägerelemente, die so angeordnet sind, dass sie sich in die Breitenrichtung und/oder Längsrichtung des Trogelements erstrecken, wobei das eine oder die mehreren Trägerelemente das Trogelement halten und eine darin ausgebildete Aussparung aufweisen; und
eine Bodenwand, die zwischen dem Trogelement und dem einen oder den mehreren Trägerelementen angeordnet ist und eine Öffnungsebene der Aussparung des einen oder der mehreren Trägerelemente verschließt, um einen geschlossenen Querschnitt zu bilden, wobei die Bodenwand durch eine durchgehende Metallplatte gebildet wird, die unter einer Bodenplatte des Trogelements liegt.

2. Batteriegehäuse nach Anspruch 1, wobei:
das eine oder die mehreren Trägerelemente ein erstes Trägerelement, das sich in die Breitenrichtung des Trogelements erstreckt, und ein zweites Trägerelement aufweisen, das sich in die Längsrichtung des Trogelements erstreckt, und
das erste und zweite Trägerelement jeweilige Öffnungsebenen aufweisen, die im Wesentlichen miteinander fluchten und durch die Bodenwand verschlossen sind.

3. Batteriegehäuse nach Anspruch 1 oder 2, das ferner ein Rahmenelement aufweist, das durch eine Metallplatte gebildet wird, die einen Außenumfang des Trogelements abdeckt,
wobei die Bodenwand am Rahmenelement befestigt ist.

## Revendications

1. Boîtier de batterie destine à contenir une batterie pour l'entraînement d'un véhicule, comprenant :
un élément de plateau en résine prévu pour maintenir la batterie ;
un ou plusieurs éléments de poutre disposés de manière à s'étendre dans le sens de la largeur et/ou le sens de la longueur de l'élément de plateau, l'élément ou les éléments de poutre supportant l'élément de plateau et ayant un renfoncement formé à l'intérieur ; et
une paroi inférieure intercalée entre l'élément de plateau et l'élément ou les éléments de poutre et fermant un plan d'ouverture du renfoncement de l'élément ou des éléments de poutre pour former une section transversale close, ladite paroi inférieure étant constituée d'une plaque métallique continue disposée sous une plaque inférieure de l'élément de plateau.

2. Boîtier de batterie selon la revendication 1, où :
l'élément ou les éléments de poutre comprennent un premier élément de poutre s'étendant dans le sens de la largeur de l'élément de plateau, et un deuxième élément de poutre s'étendant dans le sens de la longueur de l'élément de plateau, et où le premier et le deuxième éléments de poutre ont des plans d'ouverture respectifs sensiblement alignés et fermés par la paroi inférieure.

3. Boîtier de batterie selon la revendication 1 ou la revendication 2, comprenant en outre
un élément de cadre constitué d'une plaque métallique couvrant la périphérie extérieure de l'élément de plateau,
la paroi inférieure étant fixée à l'élément de cadre.
